(19) Europäisches Patentamt
European Patent Office
Office européen des brevets

(11) Veröffentlichungsnummer: **0 152 097**
**B1**

(12) # EUROPÄISCHE PATENTSCHRIFT

(45) Veröffentlichungstag der Patentschrift: **18.01.89**

(51) Int. Cl.⁴: **C 08 K 13/02,** C 08 L 27/06 // (C08K13/02, 3:22, 5:37, 5:13, 5:38, 5:53, 5:20, 5:52)

(21) Anmeldenummer: **85101491.0**

(22) Anmeldetag: **12.02.85**

(54) **Stabilisierte Hart-PVC Zusammensetzungen.**

(30) Priorität: **13.02.84 US 579232**

(43) Veröffentlichungstag der Anmeldung: **21.08.85 Patentblatt 85/34**

(45) Bekanntmachung des Hinweises auf die Patenterteilung: **18.01.89 Patentblatt 89/3**

(84) Benannte Vertragsstaaten: **BE DE FR GB IT NL**

(56) Entgegenhaltungen:
**US-A- 3 285 855**
**US-A- 3 890 268**

(73) Patentinhaber: **CIBA-GEIGY AG, Klybeckstrasse 141, CH-4002 Basel (CH)**

(72) Erfinder: **Reid, William J., 114 Princess Road, Nedlands Perth 6009 (AU)**
Erfinder: **Zappia, Jean M., 7 Arbor Street, Yonkers, NY 10701 (US)**
Erfinder: **Capocci, Gerald A., 25 Greenway Drive, Greenwich, CT 06830 (US)**
Erfinder: **Spivack, John D., 1 Blue Jay Street, Spring Valley, NY 10977 (US)**

(74) Vertreter: **Zumstein, Fritz, Dr. et al, Bräuhausstrasse 4, D-8000 München 2 (DE)**

**EP 0 152 097 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Hart-PVC wird für unterschiedlichste Zwecke verwendet, beispielswseise als Fassadenverkleidung oder als Fensterrahmen. Normalerweise werden dem Hart-PVC hohe Mengen an Titandioxid zugesetzt, beispielsweise 12 bis 15 Gewichtsteile auf 100 Teile PVC. Dieses Pigment dient einerseits der Farbgebung und soll andererseits eine Farbänderung der PVC-Zusammensetzung verhindern, die durch UV-Bestrahlung ausgelöst wird. Zusätzlich enthalten herkömmliche PVC-Zusammensetzungen noch Zinnmerkaptide als Wärme- und Verarbeitungsstabilisatoren. Die Kombination Titandioxid/Zinnmerkaptid erlaubt es, die Hart-PVC Zusammensetzung für Aussenanwendungen einzusetzen, ohne dass bei dieser eine übermässige Photozersetzung eintritt. Solche Hart-PVC Zusammensetzungen sind für einen ausreichenden Zeitraum farbstabil bzw. sind stabilisiert gegen Zersetzung des Kunststoffs.

Der Einsatz hoher Titandioxidmengen bringt jedoch gewisse Nachteile mit sich. Von besonderer Bedeutung ist der erhöhte Verschleiss von PVC-Verarbeitungsmaschinen, beispielsweise von Extrudern, die zerkratzt bzw. korrodiert werden und somit frühzeitig ausfallen. Ein weiterer wesentlicher Nachteil der herklömmlichen Hart-PVC Zusammensetzungen besteht darin, dass diese nur weiss oder pastellfarbig hergestellt werden können. Dunklere Farbtöne können wegen des hohen Titandioxidgehalts nicht erhalten werden.

Man hat versucht, den Titandioxidgehalt zu senken, doch verringert sich dann die Lichtstabilität der PVC-Zusammensetzung. Dies führt zu nicht akzeptierbaren Farbänderungen, Verlust der Schlagzähigkeit sowie zu Brüchen in der Oberfläche der Kunststoffteile.

Es besteht also ein Bedarf nach Hart-PVC mit reduziertem Titandioxidanteil, das genügend lichtstabil ist, eine ausreichende Schlagzähigkeit besitzt und das die bekannten Nachteile titandioxidreicher PVC-Zusammensetzungen nicht aufweist.

Überraschenderweise ist jetzt gefunden worden, dass der Titandioxidgehalt von Hart-PVC Zusammensetzungen bis auf 2 bis 8 Gew.-% herabgesetzt werden kann, ohne dass dabei die bekannten Nachteile titandioxidarmer PVC-Formulierungen auftreten. Die resultierende PVC-Formulierung ist licht- und wärmestabil und besitzt eine hohe Schlagzähigkeit; daneben werden Verschleisserscheinungen an Verarbeitungsmaschinen verringert und die Herstellung dunkler gefärbter PVC-Teile wird möglich.

Die vorliegende Erfindung betrifft eine Hart-PVC Zusammensetzung entaltend 2 bis 8 Gew.-% Titandioxid, bezogen auf die Menge an PVC, ein oder mehrere Zinnmerkaptide als Stabilisatoren und mindestens ein Benzoat der Formel I

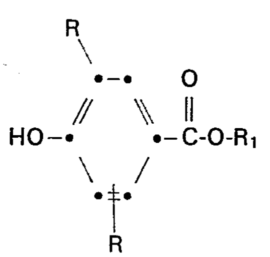

(I),

worin R Alkyl ist, $R_1$ Alkyl, halogensubstituiertes Alkyl, Phenyl, alkylsubstituiertes Phenyl, alkylsubstituiertes Alkoxycarbonylphenyl oder ein Rest

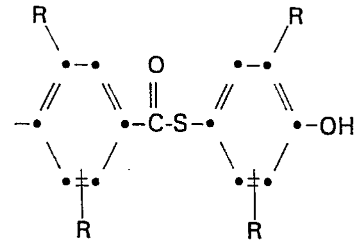

ist; oder das Benzoat besitzt die Formel

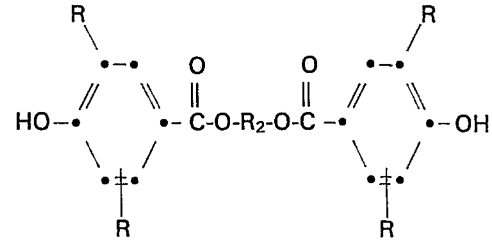

(II),

worin R die zuvor definierte Bedeutung besitzt, $R_2$ Alkylen, halogensubstituiertes Alkylen oder ein Rest

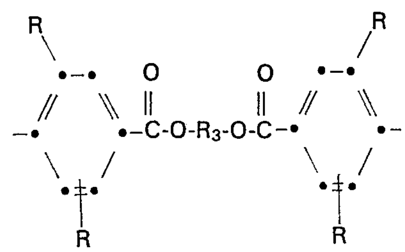

ist, worin $R_3$ Alkylen oder halogensubstituiertes Alkylen bedeutet; oder das Benzoat besitzt die Formel III

$$R_4\text{-}O-(-R_5)_d-[-(C_aH_{2a})-O-]_b-(-R_5)_d-R_4 \quad \text{(III)},$$

worin $R_4$ ein Rest

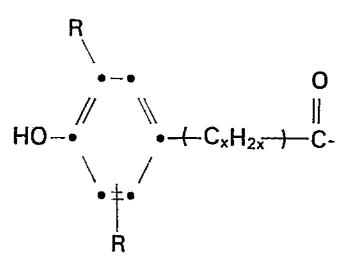

ist, a eine ganze Zahl von 2 bis 6 ist, b eine ganze Zahl von 3 bis 40 ist, x eine ganze Zahl von 0 bis 6 ist, d 0 oder 1 bedeutet, worin R die zuvor definierte Bedeutung besitzt und $R_5$ ein Rest

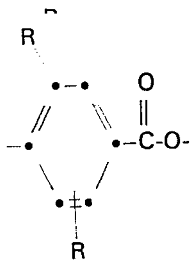

bedeutet, wobei für den Fall d = 0 x null sein muss; oder das Benzoat ist eine Verbindung der Formel IV

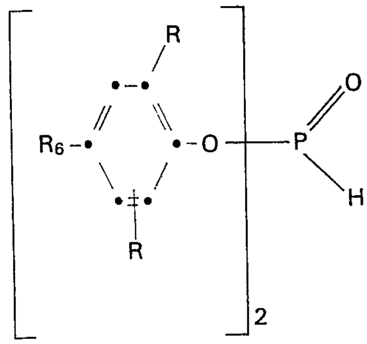

(IV),

worin R die zuvor definierte Bedeutung besitzt, $R_6$ $-COOR_7$ bedeutet, wobei $R_7$ Alkyl, Phenyl oder alkylsubstituiertes Phenyl ist; oder das Benzoat ist eine Verbindung der Formel V

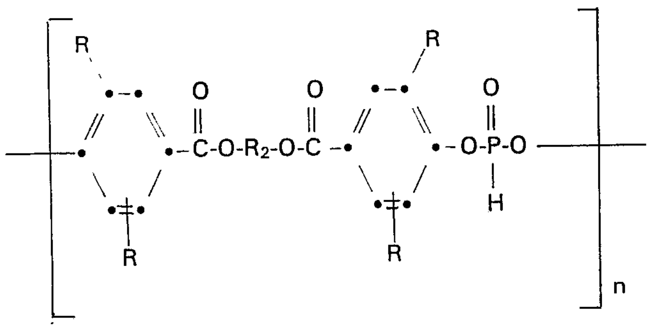

(V),

worin R und $R_2$ die zuvor definierte Bedeutung besitzen, und worin n eine ganze Zahl von 1 bis 15 ist; oder das Benzoat ist eine Verbindung der Formel VI

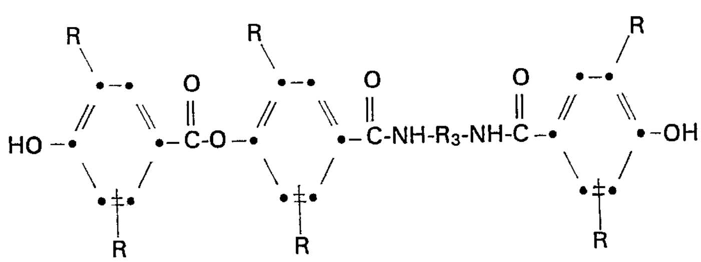

(VI),

worin R und $R_3$ die zuvor definierte Bedeutung besitzen; oder das Benzoat ist eine Verbindung der Formel VII

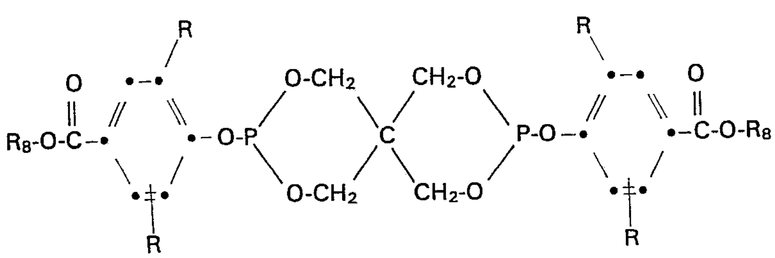

(VII),

worin R die zuvor definierte Bedeutung besitzt und $R_8$ Alkyl, Phenyl oder alkylsubstituiertes Phenyl bedeutet.

Als Alkyl bedeutet R, $R_1$, $R_7$ und $R_8$ beispielsweise Methyl, Äthyl, n-Propyl, n-Butyl, n-Pentyl, n-Hexyl, n-Heptyl, n-Octyl, n-Nonyl, n-Decyl, n-Undecyl, n-Dodecyl, n-Tetradecyl, n-Hexadecyl, n-Octadecyl, n-Eicosyl, n-Docosyl, n-Tetracosyl, n-Hexacosyl, n-Octacosyl oder n-Triacosyl, sowie Isopropyl, sek. Butyl, tert.Butyl, sek.-Pentyl, tert.Pentyl, 2-Äthylhexyl, 1,1,3,3-Tetramethylbutyl, 1,1,3,3--Tetramethylhexyl, 1,1,3,3,5,5-Hexamethylhexyl oder Gemische dieser Reste.

Als halogensubstituiertes Alkyl enthält $R_1$ beispielsweise ein bis drei Halogenatome, wie Fluor-, Chlor-, Brom- oder Iodatome, insbesondere Chlor- oder Bromatome und ganz besonders bevorzugt Chloratome.

Bei diesen Resten handelt es sich beispielsweise um Chlormethyl, Dichlormethyl, Trichlormethyl, 1-Chloräthyl, 2-Chloräthyl, 1,1-Dichloräthyl, 1,2-Dichloräthyl, 2,2-Dichloräthyl, 1,1,2-Trichloräthyl, 3-Chlorpropyl, 1-Chlorpropyl, 1-Chlorbutyl, 1-Chlorhexyl oder 1-Chloroctyl. Es kann sich aber auch um die entsprechenden Fluor-, Brom- oder Ioderivate handeln.

Als alkylsubstituiertes Phenyl sind $R_1$, $R_7$ und $R_8$ beispielsweise mono-, 2,3-di-, 2,4-di-, 2,5-di-, 2,6-di-, 3,4-di-, 3,5-di-, 2,3,4-tri-, 2,3,5-tri-, 2,3,6-tri-, 3,4,5-tri- oder 3,4,6-trisubstituierte Derivate.

Beispiele für diese Reste sind o-, m- oder p-Tolyl-, o-, m- oder p-Äthylphenyl, o-, m- oder p-Butylphenyl, o-, m- oder p-sek.Butylphenyl, o-, m- oder p-tert.Butylphenyl, o-, m- oder p-n-Hexylphenyl, o-, m- oder p-Octylphenyl sowie die in den oben angegebenen Positionen substituierten Di- oder Trimethyl-, -äthyl, -propyl-, -butyl-, -hexyl- oder -octylphenylderivate.

Als alkylsubstituiertes Alkoxycarbonylphenyl bedeutet $R_1$ vorzugsweise mit $C_2$-$C_8$-Alkyl substituierte p-Alkoxycarbonylphenyl-Reste, mit 1-18 C-Atomen im Alkoxyrest, wie zum Beispiel Methyloxycarbonyl-, Äthyloxycarbonyl-, Octyloxycarbonyl- oder Octadecyloxycarbonyl-di-tert.-butylphenyl.

Als Alkylen bedeuten $R_2$ und $R_3$ beispielsweise Methylen, Äthylen, Trimethylen, Tetramethylen, Pentamethylen, Hexamethylen, Heptamethylen, Octamethylen, Decamethylen oder Dodecamethylen. Es sind aber auch verzweigte Alkylenreste denkbar, wie beispielsweise Prop-1,1-diyl, Prop-2,2-diyl, But-1,1-diyl oder But-2,2-diyl.

Als halogensubstituiertes Alkylen besitzen $R_2$ und $R_3$ beispielsweise ein bis drei Halogenatome, wie Fluor-, Chlor-, Brom- oder Iodatome, insbesondere jedoch Brom- oder Chloratome und ganz besonders Chloratome. Bei diesen Resten handelt es sich beispielsweise um Chlormethylen, Dichlormethylen, Chloräthylen, 1,1-Dichloräthylen, 1,2-Dichloräthylen, 1,1,2-Trichloräthylen, 1-Chlor-trimethylen, 2-Chlor-trimethylen oder 1-Chlor-tetramethylen. Es kann sich aber auch um die analogen Fluor-, Brom- oder Iodderivate handeln.

R ist bevozugt $C_1$-$C_8$Alkyl. Besonders bevorzugt sind Verbindungen, bei denen beide Reste R an einem Phenylring verzweigtes $C_4$-$C_8$Alkyl bedeuten, wie beispielsweise tert.-Butyl, tert.-Amyl oder tert.-Octyl und insbesondere tert.-Butyl.

Ebenfalls bevorzugt werden Verbindungen, bei denen beide Reste R in ortho-Position zur Hydroxygruppe oder Phosphatgruppe am Phenylring bzw. in meta-Position zur Carbonylgruppe eines Phenylrings sich befinden.

$R_1$ bedeutet vorzugsweise $C_1$-$C_{24}$Alkyl, $C_2$-$C_8$ alkylsubstituiertes Alkoxycarbonylphenyl oder Thiobenzoyl.

$R_2$ und $R_3$ sind vorzugsweise $C_2$-$C_8$Alkylen.

a ist bevorzugt 2, b ist bevorzugt eine ganze Zahl von 3 bis 30, x ist bevorzugt eine ganze Zahl von 0 bis 2 und d ist bevorzugt 0.

$R_7$ und $R_8$ bedeuten vorzugsweise $C_1$-$C_{24}$Alkyl und besonders bevorzugt $C_1$-$C_{18}$Alkyl.

n ist bevorzugt eine ganze Zahl von 3 bis 5.

Die Mono- und Dibenzoate der Formeln I und II, Verfahren zu deren Herstellung und ihre Lichtstabilisatorwirkung in Polyolefinen werden in einer Anzahl von Patenten erwähnt, wie beispielsweise in US 3 112 338, US 3 206 431, US 3 681 431, US 4 128 726 oder US 4 237 042. Typische Beispiele für Vertreter dieser Verbindungsklassen sind die Methyl-, Propyl-, Amyl-, Decyl-, Hexadecyl-, Octadecyl-, Chloromethyl- oder 2,4-Di-tert.-butylphenylester, 3,5-Di-tert.butyl-4-hydroxybenzoesäure, sowie die Bis-(3,5-di-tert.-butyl-4-hydroxybenzoeester) von 1,2-Dihydroxyäthan, 1,3-Dihydroxypropan, 1,4-Dihydroxybutan, 1,5-Dihydroxypentan oder 1,6-Dihydroxyhexan. Eine weitere bekannte Verbindung der Formel II ist das 1,6-Hexandiol-bis-[4'-(3,5-di-tert.-butyl-4-hydroxybenzoyloxy)-(3',5'-di-tert.-butyl)-benzoat].

Die Polyalkylenglykolester der Formel III, Verfahren zu deren Herstellung und ihre Verwendung als Antioxidantien oder Lichtstabilisatoren in einer Vielzahl von Substraten, einschliesslich Vinylhalogenide, werden in US 3 944 594 beschrieben.

Typische Beispiele für Vertreter dieses Substanztyps sind Triäthylenglykol-, Tetraäthylenglykol-, Tripropylenglykol-, Tetrapropylenglykol-, höhere Polyäthylen- oder Polypropylenglykol-bis-(3,5-di-tert.--butyl-4-hydroxybenzoate) sowie Triäthylenglykol--bis-[4-(3',5'-di-tert.-butyl-4'-hydroxybenzyloxy)--3,5-di-tert.-butylbenzoat].

Die phosphoraltigen Benzoate der Formeln IV und V, Verfahren zu deren Herstellung und ihre Verwendung als Antioxydantien oder Lichtstabilisatoren in einer Vielzahl von Substraten, einschliesslich PVC, werden in US 4 094 855 beschrieben.

Typische Beispiele für diesen Substanztyp sind Bis-(3,5-di-tert.-butyl-4-propyloxycarbonylphenyl)--phosphonat, Bis-(3,5-di-tert.butyl-4-hexyloxycarbonylphenyl)-phosphonat oder Bis-(3,5-di-tert.butyl-4-dodecyloxycarbonylphenyl)-phosphonat.

Die Diaminobenzoate der Formel VI werden in der gleichen Weise wie die Dibenzoate der Formel II hergestellt.

Eine typische Verbindung ist N-[3,5-di-tert.-butyl-4-(3'',5''-di-tert.-butyl-4''-hydroxybenzyloxy)--benzoyl]-N'-(3',5'-di-tert.-butyl-4'-hydroxybenzoyl)-hexandiamin.

Die bicyclischen Phosphite der Formel VII, Verfahren zu deren Herstellung und ihre Anwendung als

Lichtstabilisatoren in einer Anzahl von Substraten, einschliesslich Vinylhalogenidpolymere, sind in US 4 180 498 beschrieben.

Ein typischer Vertreter dieser Verbindungsklasse ist Bis-(2,6-di-tert.-butyl-4-octadecyloxycarbonyl-phenyl)-pentaerythrit-diphosphit.

Zusammensetzungen der oben beschriebenen Benzoate mit Benztriazolen oder sterisch gehinderten Phenolen oder mit Mischungen dieser Verbindungen lassen sich ebenfalls zum Stabilisieren von Hart-PVC mit niedrigem Titandioxidgehalt einsetzen.

Typische Vertreter aus der Reihe der Benztriazole sind 2-(2'-Hydroxyphenyl)-benztriazole, wie beispielsweise das 5'-Methyl-, 3',5'-Di-tert.-butyl-, 5'-tert.-Butyl-, 5'-(1,1,3,3-Tetramethylbutyl)-, 5--Chlor-3',5'-di-tert.-butyl-, 5-Chlor-3'-tert.-butyl--5'-methyl-, 3'-sec.-Butyl-5'-tert.-butyl-, 4'-Octyloxy-, 3',5'-Di-tert.-amyl- und das 3',5'-Bis-(α,α-dimethylbenzyl)-derivat.

Typische Vertreter aus der Reihe der sterisch gehinderten Phenole sind alkylierte Monophenole, Alkyliden-bis-phenole, Ester der β(3,5-Di-tert.-butyl-4-hydroxyphenyl)-essig- oder -propionsäure bzw. die entsprechenden 3-Methyl-5-tert.-butylderivate bzw. die entsprechende Amide.

Die Benzoate werden zweckmässigerweise in Konzentrationen von 0,2 bis 4,0 Gew.-%, bezogen auf das PVC, eingesetzt. Bevorzugte Konzentrationen sind 0,5 bis 2,0 Gew.-%.

Wenn zusätzlich Benztriazole eingesetzt werden, kann deren Menge bis zu 100 Gew.-% des Benzoates betragen. Wenn zusätzlich gehinderte Phenole eingesetzt werden, kann deren Menge bis zu 33,3 Gew.-% des Benzoats betragen, wobei die Gesamtmenge beider Additive die Menge des Benzoats nicht überschreitet.

Die erfindungsgemäss zu verwendenden Titandioxide sind bekannt und im Handel erhältlich. Es handelt sich bei diesen Stoffen um gängige Zusätze, die üblicherweise in Hart-PVC Formulierungen verwendet werden. Vorzugsweise verwendet man Titandioxide vom Rutiltyp. In den erfindungsgemässen Zusammensetzungen kommen sie in Mengen von 2,0 bis 8,0 Gew.-%, bezogen auf PVC, zum Einsatz. Bevorzugt werden Mengen von 4,0 bis 6,9 Gew.-%.

Bei diesen Konzentrationen von Benzoat und Titandioxid besitzen die erfindungsgemässen Hart-PVC Formulierungen die notwendige Lichstabilität. Darüber hinaus treten die oben erwähnten Nachteile stark titandioxidhaltiger Formulierungen nicht länger auf.

Die anspruchsgemässen Zusammensetzungen ermöglichen das Stabilisieren von Hart-PVC, d.h. von weichmacherfreiem PVC, sowie von Materialien enthaltend mindestens 85 Gew.-% PVC.

Solche Harze enthaltennormalerweise Verarbeitungshilfsmittel, Schlagzähzusätze, Gleitmittel, Pigmente, Füllstoffe und weitere Zusätze.

Die erfindungsgemässen Zusammensetzungen enthalten ferner Wärmestabilisatoren, und zwar Organozinnmerkaptide. Solche Stoffe sind dem Fachmann geläufig und im Handel erhältlich. Diese Merkaptide entsprechen der allgemeinen Formel $(R'S)_ySn(R'')_{4-y}$, worin R' und R'' unabhängig voneinander Alkyl, Cycloalkyl, Aryl, Alkaryl oder Aralkyl bedeuten und worin y eine ganze Zahl von 1 bis 3 ist.

Vertreter dieser Substanztypen werden in vielen Patenten beschrieben, wie beispielsweise in US 2 641 588, US 2 726 227, US 3 933 741 oder US 3 953 385.

Bezüglich der Wirkungen und der Anwendungsmöglichkeiten von Organozinnmerkaptidstabilisatoren wird auf die Lehren der oben genannten Patentschriften verwiesen.

Dieser Stabilisatortyp wird den erfindungsgemässen Zusammensetzungen zweckmässigerweise in Mengen von 1,0 bis 4,0 Gew.-%, bezogen auf das Gewicht an PVC, zugesetzt.

Es bleibt festzustellen, dass die Effektivität dieser Merkaptide als Wärmestabilisatoren durch die Anwesenheit der Benzoate bzw. durch die Reduktion des Titandioxidgehalts nicht verringert wird.

Verarbeitungsverfahren für Hart-PVC sind dem Fachmann bekannt und die erfindungsgemässen Zusammensetzungen lassen sich nach diesen Verfahren verarbeiten. In einer gängigen Verarbeitungstechnik wird die PVC-Formulierung zunächst compoundiert und anschliessend extrudiert.

Wie bereits weiter oben erwähnt, besitzen die erfindungsgemässen Zusammensetzungen eine Menge an vorteilhaften Eigenschaften. Als besonders vorteilhaft wird angesehen, dass es möglich ist, die Titandioxidmenge herabzusetzen, ohne die Lichtstabilität und die Schlagzähigkeit zu beeinträchtigen. Ebenfalls begünstigt die reduzierte Titandioxidmenge, dass die Abnützung der Verarbeitungsmaschinen wesentlich gemindert wird und dass eine Vielzahl von Pigmentsystemen verwendet werden kann. Dadurch kann man eine breite Palette von weissen, pastellenen und dunkleren Farben erreichen, während ein hohes Titandioxidgehalt nur eine beschränkte Anzahl an Weiss- und Pastelltönen zulässt.

*Beispiel 1:* Die folgenden Hart-PVC Formulierungen werden in den nachfolgenden Beispielen verwendet:

| Rezepturbestandteile | Formulierung Nr. (Gew.-Teile) I | II | III |
|---|---|---|---|
| PVC-Harz 1 [1)] | 100 | 100 | — |
| PVC-Harz 2 [2)] | — | — | 100 |
| Methylacrylsäureester-Verarbeitungshilfsmittel [3)] | 2,0 | 1,5 | 1,5 |
| Schlagzähzusatz [4)] | 7,0 | 5,0 | 5,0 |
| Calzium-Stearat | 0,8 | 1,0 | 1,0 |
| Paraffinwachs | 1,0 | 1,0 | 1,0 |
| Polyäthylenwachs | 0,2 | 1,0 | 1,0 |
| Zinnmerkaptid [5)] | 2,0 | 1,6 | 1,6 |
| Titandioxid (Rutil nicht kreidig) | variabel | variabel | variabel |
| Lichtstabilisator | variabel | variabel | variabel |

1) GEON® 103EP-76 von B.F. Goodrich Co.
2) GEON® 85862 von B.F. Goodrich Co.
3) ACRYLOYD® K 120 von Rohm & Haas
4) ACRYLOYD® K 330 von Rohm und Haas
5) THERMOLITE® T 137 von M & T Chemicals

Die Mischungsbestandteile werden zusammen mit den jeweiligen Anteilen $TiO_2$ und Lichtstabilisator gemischt. Anschliessend werden die Proben auf einem Zweiwalzenmischer plastifiziert (vordere Walze 171 °C; hintere Walze 165°C), bis sich ein Walzenfell gebildet hat. Nach weiteren 3 Minuten auf dem Zweiwalzenmischer wird das Fell entfernt und unter Druck verformt (Temperatur: 182°C; 2 Minuten ohne Druck, 1 Minute Druckanstieg, 2 Minuten Belastung bei Höchstdruck; Abkühlen auf 38°C). Man erhält Testplatten von 5,1 cm × 5,1 cm Fläche.

Als Lichtstabilisatoren werden folgende Benzoate getestet:

A 1,6-Hexandiol-bis-(3,5-di-t-butyl-4-hydroxybenzoat)
B 1,6-Hexandiol-bis-[4'-(3,5-di-t-butyl-4-hydroxybenzoyloxy)-3',5'-di-t-butylbenzoat]
C Phosphonsäure-n-dodecyl-3,5-di-t-butyl-4-hydroxybenzoat-diester
D Phosphonsäure-n-hexyl-3,5-di-t-buty-4-hydroxybenzoatdiester
E Poly-[1,6-hexandiol-bis-(3,5-di-t-butyl-4-hydroxybenzoat)]-phosphonat
F Octadecyl-4'-(3,5-di-t-butyl-4-hydroxybenzoyloxy)-3',5'-di-t-butylbenzoat
G S-(3',5'-di-t-butyl-4-hydroxyphenyl)-4''-(3,5-di-t-butyl-4-hydroxybenzoyloxy)-3'',5''-di-t-butyl-thiobenzoat
H Methyl-3,5-di-t-butyl-4-hydroxybenzoat
I Octadecyl-3,5-di-t-butyl-4-hydroxybenzoat
J Hexadecyl-3,5-di-t-butyl-4-hydroxybenzoat
K 2',4'-Di-t-butylphenyl)-3,5-di-t-butyl-4-hydroxybenzoat
L Triäthylenglykol-bis-(3,5-di-t-butyl-4-hydroxybenzoat)
M Triäthylenglykol-bis-[4-(3',5'-di-t-butyl-4'-hydroxy-benzoyloxy)]-3,5-di-t-butylbenzoat
N N-[3,5-di-t-buty-4-(3',5'-di-t-butyl-4'-hydroxybenzoyloxy)-benzoyl]-N'-(3',5'-di-t-butyl-4''-hydroxybenzoyl)-hexandiamin
O Bis-(2,6-di-t-butyl-4-octadecyloxycarbonylphenyl)-penterythritdiphosphit.

Darüber hinaus werden noch Lichtstabilisatoren untersucht, die keinen Benzoesäurerest enthalten:

P 2(2'-Hydroxy-3',5'-di-tert-amylphenyl)-benztriazol
Q 2(2'-Hydroxy-5'-methylphenyl)-benztriazol
R Octadecyl-3-(3',5'-di-t-butyl-4'-hydroxyphenyl)-propionat.

Die unterschiedlichen Proben werden folgenden Testbedingungen unterworfen.

*Test I:* Xenon Weatherometer Test (trocken)

Die Proben werden in einem Xenon Weatherometer bei einer relativen Feuchtigkeit von 70-75% und bei einer Temperatur der Rückseite von 55-60°C bestrahlt. Innerhalb bestimmter Intervalle werden Proben entnommen und es wird der Yellowness Index gemäss ASTM D-1925-63T bestimmt. Hohe Werte zeigen eine geringe Stabilität an. Als 'zersetzt' werden Proben angesehen, deren Yellowness Index über 40 liegt.

*Test II:* Xenon Weatherometer Test (nass)

Verfahren wie bei Test I mit der Abänderung, dass ein 102-minütiger Trockenzyklus und ein 18-minütiger Sprühzyklus einander abwechseln. Die Probengüte wird wie oben durch Messung des Yellowness-Index bestimmt.

*Test III:* Freibewitterung

Die Proben werden in Arizona freibewittert. Die Strahlungsdosis beträgt 37,9804 g · J/cm² (92000 Langley). Der Yellowness-Index der Proben wird vor Beginn des Tests und nach 6 Monaten bestimmt. Gleichzeitig wird die Schlagzähigkeit der Proben gemessen (Dynatup Model 800; Instrumented Drop Weight Impact System der Fa. Tinuius Olson).

*Test IV:* EMMAQUA Test

Die Freibewitterung wird beschleunigt durch zusätzliche Belichtung mit Hilfe von Spiegeln und Sprühwasserzyklen (ASTM 838E). Der Yellowness-Index wird gemessen, nachdem die Probe unterschiedlichen Strahlungsdosen ausgesetzt worden war.

Die Testergebnisse sind in den folgenden Tabellen aufgelistet:

TABELLE 1: Formulierung II/Test I

| Stabilisator | Konzentration des Stabilisators (Gew.-%) | Konzentration des $TiO_2$ (Gew.-%) | Yellowness-Index | | | |
|---|---|---|---|---|---|---|
| | | | 0 h | 1505 h | 2710 h | 3390 h |
| — | — | 12 | 5 | 6 | 19 | 25 |
| A | 2 | 5 | 6 | 6 | 19 | 20 |
| A/P | 1/1 | 5 | 7 | 7 | 20 | 21 |
| C/P | 1/1 | 5 | 7 | 6 | 16 | 17 |
| | | | 0 h | 1070 h | 1985 h | 3235 h |
| — | — | 12 | 5 | 6 | 9 | 13 |
| — | — | 5 | 5 | 8 | 17 | 21 |
| C | 1 | 5 | 5 | 6 | 9 | 16 |
| C | 2 | 5 | 5 | 5 | 6 | 14 |
| D | 1 | 5 | 5 | 5 | 8 | 15 |
| E | 1 | 5 | 5 | 6 | 10 | 16 |
| A | 1 | 5 | 6 | 6 | 9 | 15 |

TABELLE 1: (Fortsetzung)

| Stabilisator | Konzentration des Stabilisators (Gew.-%) | Konzentration des $TiO_2$ (Gew.-%) | Yellowness-Index | | | |
|---|---|---|---|---|---|---|
| | | | 0 h | 1090 h | 2173 h | 3043 h |
| — | — | 12 | 5 | 6 | 8 | 13 |
| — | — | 5 | 5 | 8 | 17 | 21 |
| C/Q | 1/1 | 5 | 5 | 7 | 9 | 13 |
| C/R | 1/1 | 5 | 5 | 8 | 12 | 13 |
| C/Q/R | 1/0,5/0,5 | 5 | 5 | 9 | 13 | 16 |
| | | | 0 h | 1600 h | | |
| — | — | 12 | 4 | 8 | | |
| — | — | 5 | 6 | 13 | | |
| O | 1 | 5 | 5 | 8 | | |
| O | 2 | 5 | 5 | 7 | | |

TABELLE 2: Formulierung II/Test II

| Stabilisator Serie A | Konzentration des Stabilisators (Gew.-%) | Konzentration des $TiO_2$ (Gew.-%) | Yellowness-Index | | |
|---|---|---|---|---|---|
| | | | 0 h | 3800 h | 5850 |
| — | — | 12 | 5 | 6 | 7 |
| — | — | 5 | 5 | 8 | 15 |
| C | 1 | 5 | 5 | 6 | 12 |
| C | 2 | 5 | 5 | 6 | 10 |
| D | 1 | 5 | 5 | 6 | 10 |
| E | 1 | 5 | 5 | 7 | 12 |
| A | 1 | 5 | 6 | 7 | 11 |
| F | 1 | 5 | 6 | 8 | 15 |
| G | 1 | 5 | 6 | 13 | 16 |

TABELLE 2: (Fortsetzung)

| Stabilisator Serie B | Konzentration des Stabilisators (Gew.-%) | Konzentration des $TiO_2$ (Gew.-%) | Yellowness-Index | | |
|---|---|---|---|---|---|
| | | | 0 h | 3800 h | 5850 |
| — | — | 15 | 6 | 7 | 9 |
| — | — | 5 | 6 | 11 | 16 |
| H | 1 | 5 | 6 | 9 | 16 |
| I | 1 | 5 | 6 | 8 | 13 |
| I | 2 | 5 | 5 | 8 | 12 |
| J | 1 | 5 | 6 | 8 | 12 |
| J | 2 | 5 | 6 | 9 | 13 |
| K | 1 | 5 | 6 | 11 | 18 |
| A | 1 | 5 | 6 | 8 | 13 |
| A | 2 | 5 | 6 | 8 | 13 |
| B | 1 | 5 | 6 | 10 | 14 |
| L | 1 | 5 | 6 | 10 | 13 |
| M | 1 | 5 | 6 | 11 | 14 |
| N | 1 | 5 | 7 | 10 | 13 |
| C | 1 | 5 | 6 | 8 | 13 |
| C | 2 | 5 | 6 | 7 | 10 |

Die folgende Testserie zeigt, dass eine kleine Menge Titandioxid in den erfindungsgemässen Hart-PVC Formulierungen anwesend sein muss. Darüber hinaus wird an dieser Serie ersichtlich, dass grössere Mengen Titandioxid durch Benzoate ersetzt werden können.

TABELLE 3: Formulierung II/Test II

| Stabilisator | Konzentration des Stabilisators (Gew.-%) | Konzentration des $TiO_2$ (Gew.-%) | Yellowness-Index | | |
|---|---|---|---|---|---|
| | | | 0 h | 3800 h | 5850 |
| — | — | 0 | 9 | zersetzt | zersetzt |
| — | — | 3 | 5 | 18 | 27 |
| — | — | 5 | 6 | 10 | 17 |
| — | — | 8 | 5 | 7 | 11 |
| — | — | 12 | 5 | 7 | 9 |
| A | 2 | 0 | 12 | zersetzt | zersetzt |
| A | 1,5 | 3 | 5 | 16 | 25 |
| A | 0,5 | 5 | 6 | 10 | 14 |
| A | 1 | 5 | 5 | 10 | 14 |
| A | 1,5 | 5 | 6 | 10 | 15 |
| A | 2 | 5 | 5 | 9 | 15 |
| A | 0,5 | 8 | 6 | 7 | 10 |
| C | 2 | 0 | 12 | zersetzt | zersetzt |
| C | 1,5 | 3 | 6 | 11 | 19 |
| C | 1 | 3 | 6 | 12 | 17 |
| C | 0,5 | 5 | 5 | 8 | 13 |
| | | | 0 h | 1505 h | 2710 h |
| C | 1 | 5 | 6 | 8 | 13 |
| C | 1,5 | 5 | 5 | 8 | 11 |
| C | 2 | 5 | 5 | 8 | 10 |
| C | 0,5 | 8 | 5 | 7 | 8 |

TABELLE 4: Formulierung I/Test III

| Stabilisator | Konzentration des Stabilisators (Gew.-%) | Konzentration des $TiO_2$ (Gew.-%) | Yellowness-Index | | Schlagzähigkeit (mkg) | |
|---|---|---|---|---|---|---|
| | | | Beginn | nach 6 Monaten | Beginn | nach 6 Monaten |
| — | — | 12 | 6 | 15 | 9,6 | 9,0 |
| — | — | 5 | 8 | 22 | 6,0 | 0,6 |
| A | 1 | 5 | 6 | 11 | 7,8 | 8,4 |
| C | 1 | 5 | 5 | 9 | 9,3 | 9,3 |
| — | — | 5 | 8 | 22 | 6,0 | 0,6 |

TABELLE 5: Formulierung I/Test IV

| Stabilisator | Konzentration des Stabilisators (Gew.-%) | Konzentration des $TiO_2$ (Gew.-%) | Yellowness-index | | |
|---|---|---|---|---|---|
| | | | Beginn | nach 250 kly *) | nach 400 kly *) |
| — | — | 12 | 6 | 12 | 24 |
| — | — | 5 | 6 | 19 | 34 |
| A | 1 | 5 | 6 | 11 | 26 |
| C | 1 | 5 | 5 | 8 | 24 |

*) kilo langley

TABELLE 6: Formulierung III/Spezialtest *

| Stabilisator | Konzentration des Stabilisators (Gew.-%) | Konzentration des $TiO_2$ (Gew.-%) | Yellowness-Index (ASTM D-1925-63T) Beginn |
|---|---|---|---|
| — | — | 5 | 6,7 |
| A | 1 | 5 | 5,8 |
| C | 1 | 5 | 4,5 |

* Für diesen Test werden die Proben nach dem Mahlen unter folgenden Bedingungen extrudiert:
Zylinder 1 : 193°C
Zylinder 2 : 196°C
Zylinder 3 : 196°C
(Extruder)-Düse 1 : 196°C
Düse 2 : 196°C
Düse 3 : 196°C
Schneckengeschwindigkeit: 80 Umdrehungen pro Minute
Die Proben werden keiner zusätzlichen Bestrahlung ausgesetzt.

TABELLE 7: Formulierung I/Test II

a) In diesem Test werden pigmentierte PVC-Zusammensetzungen untersucht. Das Pigmentsystem besteht aus 2 Gew.-Teilen $TiO_2$ und 2 Gew.-Teilen Buff Yellow 10404 (Drakenfeld Colors). Beide Pigmente werden dem PVC gleichzeitig zugesetzt.

| Stabilisator | Konzentration des Stabilisators (Gew.-%) | Δ E (Änderung der Gesamtfarbe) *) Anfang | 4000 h |
|---|---|---|---|
| — | — | 0 | 26 |
| C | 2 | 0 | 12 |
| C | 2 | 0 | 12 |

*) Messung nach ASTM D 2244-79; § 4,23 (nicht belichtetem System wird 'O' zugewiesen)

b) In diesem Test werden PVC-Zusammensetzungen mit einem anderen Pigmentsystem untersucht. Die Pigmentierung wird erreicht durch Zugabe von 2 Teilen $TiO_2$, 4 Teilen (CROMOPHTAL® 3927A (Ciba-Geigy AG), 2 Teilen Buff yellow 10404 (Drakenfeld Colors7 und 0,05 Teilen IRGAZIN® Blue 3GT (Ciba-Geigy AG) (jeweils Gewichtsteile). Alle Pigmente werden dem PVC gleichzeitig zugesetzt.

| Stabilisator | Konzentration des Stabilisators (Gew.-%) | Δ E (Änderung der Gesamtfarbe) *) Anfang | 4000 h |
|---|---|---|---|
| — | — | 0 | 12 |
| A | 1 | 0 | 6 |
| A | 2 | 0 | 7 |
| C | 1 | 0 | 10 |
| C | 2 | 0 | 9 |

*) Messung nach Astm D 2244-79; 4.2.3 (nicht belichtetem System wird der Wert 0 zugewiesen).

Diese Ergebnisse zeigen, dass die erfindungsgemässen Hart-PVC Zusammensetzungen gleich gute oder oft bessere Lichtstabilität aufweisen, als Zusammensetzungen mit einem unerwünscht hohen Titandioxidgehalt. Daraus folgt, dass die erfindungsgemäss eingesetzten Benzoate die Wirkung der ersetzten Titandioxidmenge eindeutig kompensieren und gleichzeitig eine wirksamere Verarbeitung sowie die Verwendung eines grösseren Pigmentsortiments zulassen.

**Patentansprüche**

1. Hart-PVC Zusammensetzung enthaltend 2 bis 8 Gew.-% Titandioxid, bezogen auf die Menge an PVC, ein oder mehrere Organozinnmerkaptide als Stabilisatoren und mindestens ein Benzoat der Formel I

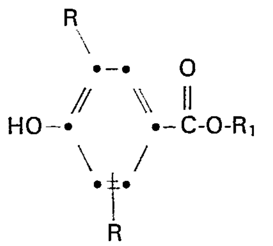

(I),

worin R Alkyl ist, $R_1$ Alkyl, Haloalkyl, Phenyl, alkylsubstituiertes Phenyl, alkylsubstituiertes Alkoxycarbonylphenyl oder ein Rest

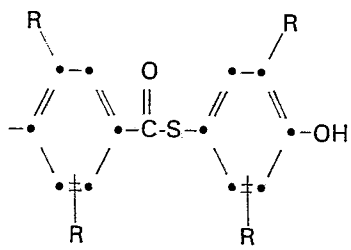

ist; oder das Benzoat besitzt die Formel

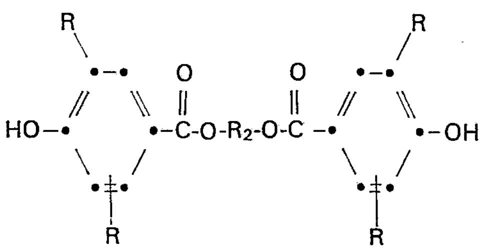

(II),

worin R die oben definierte Bedeutung besitzt, $R_2$ Alkylen, Haloalkylen oder ein Rest

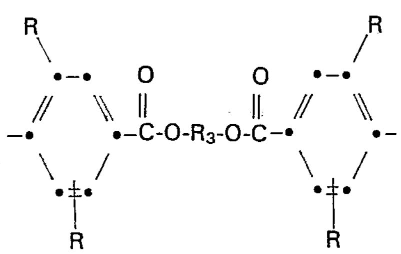

ist, worin $R_3$ Alkylen oder Haloalkylen bedeutet; oder das Benzoat besitzt die Formel III

$$R_4\text{-}O-(-R_5)_d-[-(C_aH_{2a})-O-]_b-(-R_5-)_d-R_4 \quad \text{(III)},$$

worin $R_4$ ein Rest

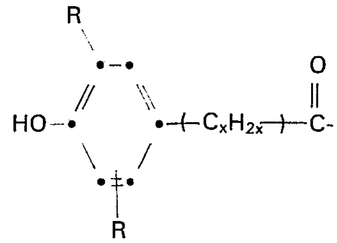

ist, a eine ganze Zahl von 2 bis 6 ist, b eine ganze Zahl von 3 bis 40 ist, x eine ganze Zahl von 0 bis 6 ist, d 0 oder 1 debeutet, worin R die zuvor definierte Bedeutung besitzt und $R_5$ ein Rest

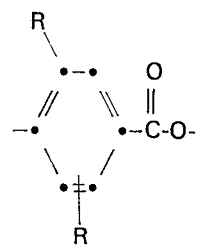

bedeutet, wobei für den Fall d = 0 x null sein muss; oder das Benzoat ist eine Verbindung der Formel IV

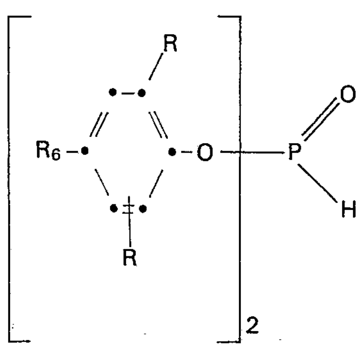

(IV),

worin R die zuvor definierte Bedeutung besitzt, $R_6$ -$COOR_7$ bedeutet, wobei $R_7$ Alkyl, Phenyl oder alkylsubstituiertes Phenyl ist; oder das Benzoat ist eine Verbindung der Formel V

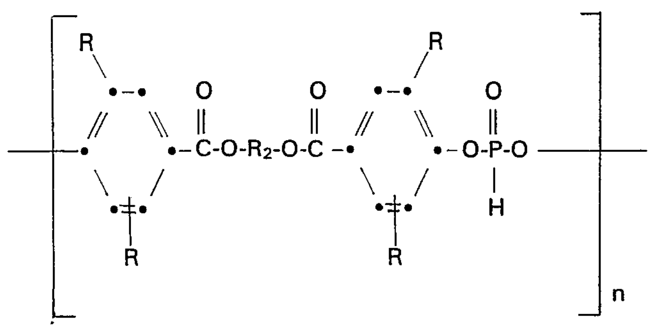

(V),

worin R und $R_2$ die zuvor definierte Bedeutung besitzen, und worin n eine ganze Zahl von 1 bis 15 ist; oder das Benzoat ist eine Verbindung der Formel VI

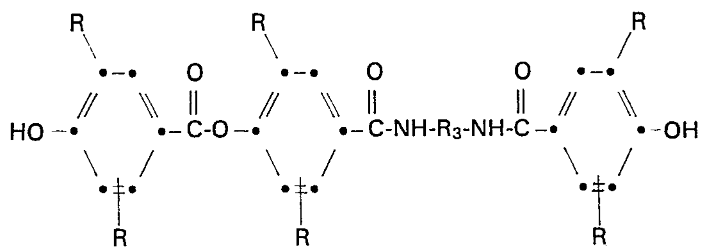

(VI),

worin R und $R_3$ die zuvor definierte Bedeutung besitzen; oder das Benzoat ist eine Verbindung der Formel VII

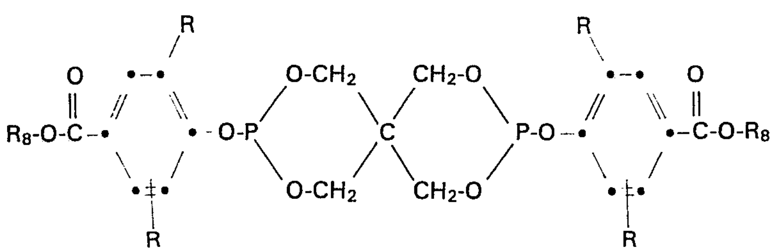

(VII),

worin R die zuvor definierte Bedeutung besitzt und $R_8$ Alkyl, Phenyl oder alkylsubstituiertes Phenyl bedeutet.

2. Zusammensetzung Anspruch 1, worin das Benzoat eine Verbindung der Formel I ist.

3. Zusammensetzung gemäss Anspruch 2, worin beide Reste R eines Phenylrings tert.-Butyl sind und worin beide Reste R sich in ortho-Position zur Hydroxygruppe des Phenylrings befinden.

4. Zusammensetzung gemäss Anspruch 2, worin $R_1$ $C_1$-$C_{24}$Alkyl bedeutet.

5. Zusammensetzung gemäss Anspruch 1, worin das Benzoat eine Verbindung der Formel II ist.

6. Zusammensetzung gemäss Anspruch 5, worin alle Reste R tert.-Butyl bedeuten und worin alle Gruppen R sich in ortho-Position zur Hydroxygruppe des Phenylrings oder sich in meta-Position zur Carbonylgruppe des Phenylrings befinden.

7. Zusammensetzung gemäss Anspruch 5, worin $R_2$ und $R_3$ $C_2$-$C_8$-Alkylen bedeuten.

8. Zusammensetzung gemäss Anspruch 1, worin das Benzoat eine Verbindung der Formel III ist.

9. Zusammensetzung gemäss Anspruch 8, worin alle Reste R tert.-Butyl bedeuten und worin alle Reste R sich in Ortho-Position zur Hydroxygruppe des Phenylrings oder sich in meta-Position zur Carbonylgruppe des Phenylrings befinden.

10. Zusammensetzung gemäss Anspruch 8, worin a 2 ist und b 3 bedeutet.

11. Zusammensetzung gemäss Anspruch 1, worin das Benzoat eine Verbindung der Formel IV ist.

12. Zusammensetzung gemäss Anspruch 11,

worin die Reste R tert.-Butyl bedeuten und worin die Reste R sich in ortho-Position zur Phosphat-Gruppe am Phenylring befinden.

13. Zusammensetzung gemäss Anspruch 11, worin $R_7$ $C_1$-$C_{24}$Alkyl bedeutet.

14. Zusammensetzung gemäss Anspruch 1, worin das Benzoat eine Verbindung der Formel V ist.

15. Zusammensetzung gemäss Anspruch 14, worin alle Reste R tert.-Butyl bedeuten und worin alle Reste R sich in meta-Position zu der Carbonylgruppe des Phenylrings befinden und worin $R_2$ $C_2$-$C_8$Alkylen bedeutet.

16. Zusammensetzung gemäss Anspruch 1, worin das Benzoat eine Verbindung der Formel VI ist.

17. Zusammensetzung gemäss Anspruch 16, worin alle Reste R tert.-Butyl bedeuten und worin alle Reste R sich in meta-Position zu der Carbonylgruppe befinden und worin $R_3$ $C_2$-$C_8$Alkylen bedeutet.

18. Zusammensetzung gemäss Anspruch 1, worin das Benzoat eine Verbindung der Formel VII ist.

19. Zusammensetzung gemäss Anspruch 18, worin alle Gruppen R sich in meta-Position zur Carbonylgruppe des Phenylrings befinden und worin $R_8$ $C_1$-$C_{24}$Alkyl ist.

20. Zusammensetzung gemäss Anspruch 1, enthaltend 0,2 bis 4,0 Gew.-% eines Benzoats, bezogen auf das Gewicht des PVC.

21. Zusammensetzung gemäss Anspruch 1 enthaltend zusätzlich ein Benztriazol, ein sterisch gehindertes Phenol oder Mischungen dieser Verbindungen; wobei die Menge an Benztriazol bis zu 100 Gew.-% derjenigen des Benzoats und die Menge an sterisch gehindertem Phenol bis zu 33 Gew.-% des Benzoats betragen kann und wobei die Gesamtmenge beider zusätzlicher Additive die Menge des Benzoats nicht überschreitet.

22. Zusammensetzung gemäss Anspruch 21, worin das Benzoat der Formel II entspricht.

23. Zusammensetzung gemäss Anspruch 21, worin das Benzoat einer Verbindung der Formel IV entspricht.

## Claims

1. A rigid PVC composition containing 2 to 8% by weight of titanium dioxide, based on the amount of PVC, one or more organotin mercaptides as stabilizers and at least one benzoate of the formula I

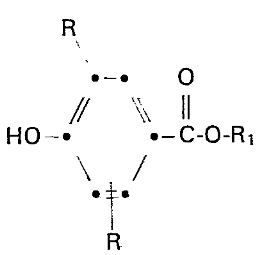

(I),

wherein R is alkyl and $R_1$ is alkyl, haloalkyl, phenyl, alkyl-substituted phenyl, alkyl-substituted alkoxycarbonylphenyl or a radical

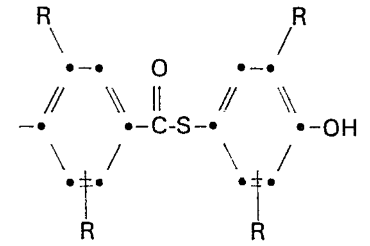

or the benzoate has the formula

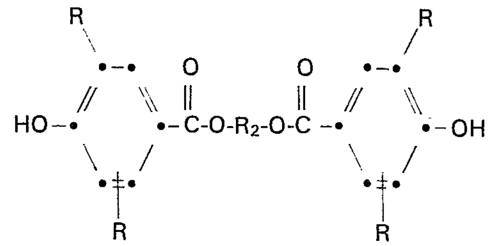

(II),

wherein R is as defined above, $R_2$ is alkylene, haloalkylene or a radical

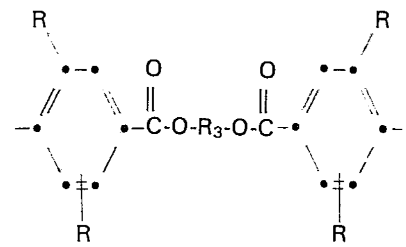

wherein $R_3$ is alkylene or haloalkylene; or the benzoate has the formula III

$$R_4\text{-}O-(R_5)_d-[(C_aH_{2a})-O]_b-(R_5)_d-R_4 \quad (III),$$

wherein $R_4$ is a radical

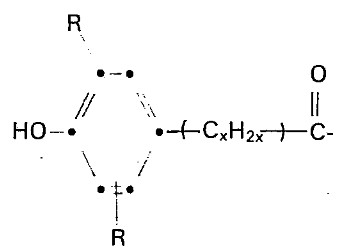

a is an integer from 2 to 6, b is an integer from 3 to 40, x is an integer from 0 to 6 and d is 0 or 1, wherein R is as previously defined, and $R_5$ is a radical

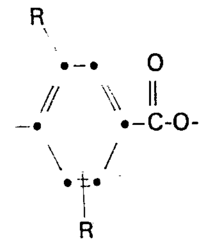

where, if d = 0, x must be zero; or the benzoate is a compound of the formula IV

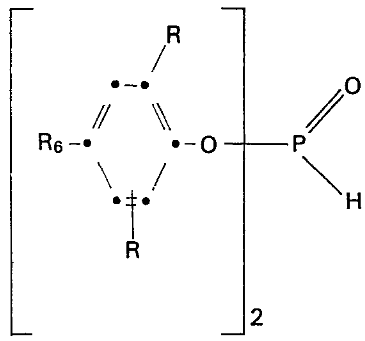

(IV),

wherein R is as previously defined, $R_6$ is $-COOR_7$, wherein $R_7$ is alkyl, phenyl or alkyl-substituted phenyl; or the benzoate is a compound of the formula V

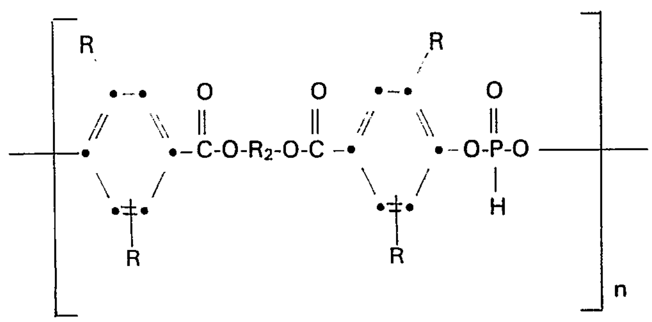

(V),

wherein R and $R_2$ are as previously defined, and wherein n is an integer from 1 to 15; or the benzoate is a compound of the formula VI

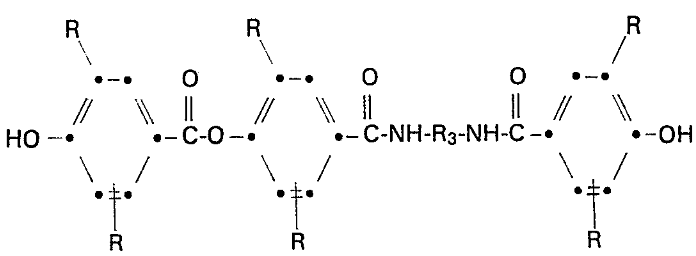

(VI),

wherein R and $R_3$ are es previously defined; or the benzoate is a compound of the formula VII

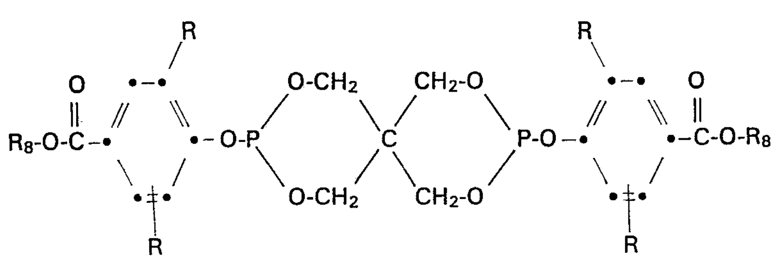

(VII),

wherein R is previously defined and $R_8$ is alkyl, phenyl or alkyl-substituted phenyl.

2. A composition according to claim 1, wherein the benzoate is a compound of the formula I.

3. A composition according to claim 2, wherein both radicals R of a phenyl ring are tert.-butyl and wherein both radicals R are in the ortho-position to the hydroxy group of the phenyl ring.

4. A composition according to claim 2, wherein $R_1$ is $C_1$-$C_{24}$alkyl.

5. A composition according to claim 1, wherein the benzoate is a compound of the formula II.

6. A composition according to claim 5, wherein all the radicals R are tert-butyl and wherein all the groups R are in the ortho-position to the hydroxy group of the phenyl ring or are in the meta-position to the carbonyl group to the phenyl ring.

7. A composition according to claim 5, wherein $R_2$ and $R_3$ are $C_2$-$C_8$alkylene.

8. A composition according to claim 1, wherein the benzoate is a compound of the fromula III.

9. A composition according to claim 8, wherein all the radicals R are tert-butyl and wherein all the radicals R are in the ortho-position to the hydroxyl group of the phenyl ring or are in the meta-position to the carbonyl group of the phenyl ring.

10. A composition according to claim 8, wherein a is 2 and b is 3.

11. A composition according to claim 1, wherein the benzoate is a compound of the formula IV.

12. A composition according to claim 11, wherein the radicals R are tert-butyl and wherein the radicals R are in the ortho-position to the phosphate group on the phenyl ring.

13. A composition according to claim 11, wherein $R_7$ is $C_1$-$C_{24}$alkyl.

14. A composition according to claim 1, wherein the benzoate is a compound of the formula V.

15. A composition according to claim 14, wherein all the radicals R are tert-butyl and wherein all the radicals R are in the meta-position to the carbonyl group of the phenyl ring and wherein $R_2$ is $C_2$-$C_8$alkylene.

16. A composition according to claim 1, wherein the benzoate is a compound of the formula VI.

17. A composition according to claim 16, wherein all the radicals R are tert-butyl and wherein all the radicals R are in the meta-position to the carbonyl group and wherein $R_3$ is $C_2$-$C_8$alkylene.

18. A composition according to claim 1, wherein the benzoate is a compound of the formula VII.

19. A composition according to claim 18, wherein all the groups R are in the meta-position to the carbonyl group of the phenyl ring and wherein $R_8$ is $C_1$-$C_{24}$alkyl.

20. A composition according to claim 1 containing 0.1 to 4.0% by weight of a benzoate, based on the weight of the PVC.

21. A composition according to claim 1, containing additionally a benzotriazole, a sterically hindered phenol or mixtures of these compounds; where the amount of benzotriazole can be up to 100% weight of that of the benzoate and the amount of sterically hindered phenol can be up to 33% by weight of the benzoate and where the total amount of both additional additives does not exceed the amount of the benzoate.

22. A composition according to claim 21, wherein the benzoate corresponds to the formula II.

23. A composition according to claim 21, wherein the benzoate corresponds a compound of the formula IV.

## Revendications

1. Composition à base de PVC dur qui contient de 2 à 8% en poids de dioxyde de titane, par rapport à la quantité de PVC, un ou plusieurs thiolates d'organo-étains comme stabilisants, et au moins un benzoate pris parmi ceux qui répondent aux formules I à VII suivantes:

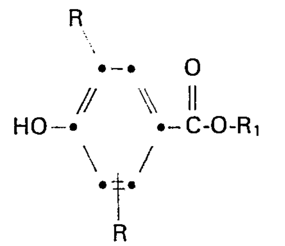

(I),

dans laquelle R représente un alkyle, et $R_1$ représente un alkyle, un alkyle halogéné, un phényle, un phényle portant un alkyle comme substituant, un alcoxycarbonyle portant un alkyle comme substituant, ou un radical:

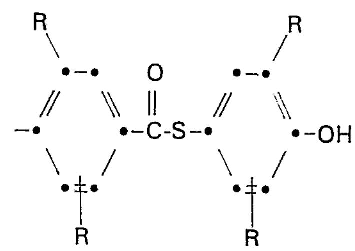

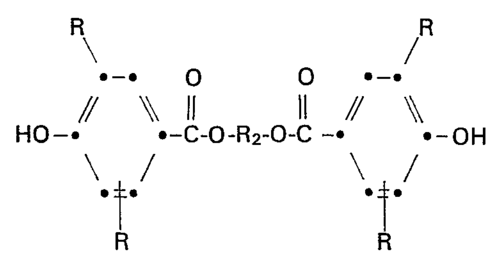

(II),

dans laquelle R a la signification indiquée ci-dessus et $R_2$ représente un alkylène, un alkylène halogéné ou un radical de formule:

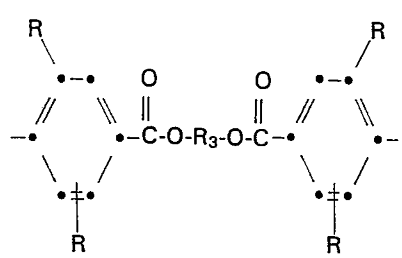

dans laquelle $R_3$ représente un alkylène ou un alkyle halogéné,

$$R_4\text{-}O-(R_5)_d-[-(C_aH_{2a})-O-]_b-(R_5)_d-R_4 \quad \text{(III)},$$

dans laquelle $R_4$ représente un radical:

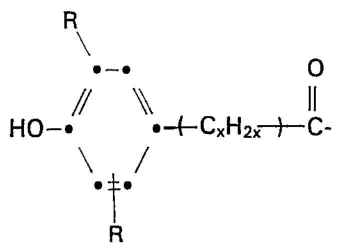

a représente un nombre entier de 2 à 6, b un nombre entier de 3 à 40, x un nombre entier de 0 à 6, d le nombre 0 ou le nombre 1, R a la signification indiquée ci-dessus, et $R_5$ représente un radical:

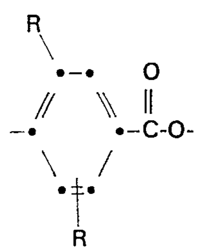

avec la condition que x soit nul lorsque d est égal a 0,

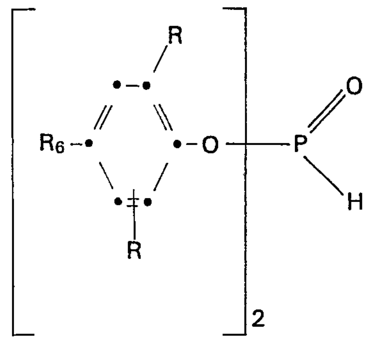

(IV),

dans laquelle R a la signification qui lui a été donnée ci-dessus et $R_6$ représente un radical $-COOR_7$ dont le symbole $R_7$ désigne un alkyle, un phényle ou un phényle porteur d'un alkyle,

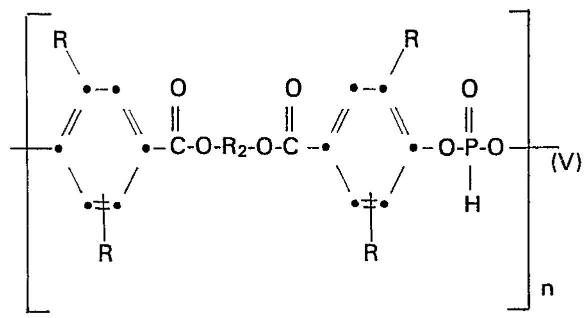

(V)

dans laquelle R et $R_2$ ont les significations qui leur ont été données plus haut, et n désigne un nombre entier de 1 à 15,

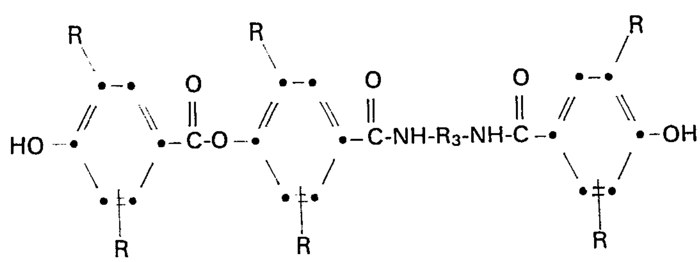

(VI),

dans laquelle R et $R_3$ ont les significations qui leur ont été attribuées ci-dessus,

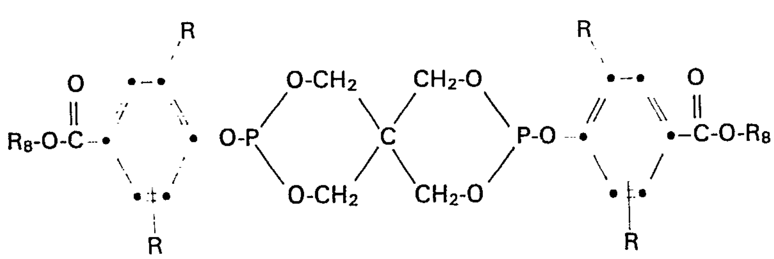

(VII),

dans laquelle R a la signification indiquée ci-dessus et $R_8$ représente un alkyle, un phényle ou un phényle porteur d'un alkyle.

2. Composition selon la revendication 1 dans laquelle le benzoate est un composé de formule I.

3. Composition selon la revendication 2 dans laquelle les deux substituants R portés par un noyau phényle sont chacun un radical tert-butyle occuppent chacun une position ortho relativement au radical hydroxy du noyau phényle.

4. Composition selon la revendication 2 dans laquelle $R_1$ représente un radical alkyle en $C_1$-$C_{24}$.

5. Composition selon la revendication 1 dans laquelle le benzoate est un composé de formule II.

6. Composition selon la revendication 5 dans laquelle les symboles R représentent chacun un radical tert-butyle et dans laquelle les radicaux R sont tous en ortho par rapport au radical hydroxy sur le noyau phényle ou en méta par rapport au radical carbonyle sur le noyau phényle.

7. Composition selon la revendication 5 dans laquelle $R_2$ et $R_3$ représentent chacun un radical alkylène en $C_2$-$C_8$.

8. Composition selon la revendication 1 dans laquelle le benzoate est un composé de formule III.

9. Composition selon la revendication 8 dans laquelle les radicaux R sont chacun un radical tert-butyle et sont tous en ortho par rapport au radical hydroxy lié au noyau phényle ou en méta par rapport au radical carbonyle lié au noyau phényle.

10. Composition selon la revendication 8 dans laquelle a est égal à 2 et b est égal à 3.

11. Composition selon la revendication 1 dans laquelle le benzoate est un copmposé de formule IV.

12. Composition selon la revendication 11 dans laquelle les symboles R représentent chacun un radical tert-butyle et dans laquelle les radicaux R sont en ortho par rapport au radical de phosphate porté par le noyau phényle.

13. Composition selon la revendication 11 dans laquelle $R_7$ représente un radical alkyle en $C_1$-$C_{24}$.

14. Composition selon la revendication 1 dans laquelle le benzoate est un composé de formule V.

15. Composition selon la revendication 14 dans laquelle les symboles R représentent chacun un radical tert-butyle et tous les radicaux R sont en méta par rapport au radical carbonyle lié au noyau phényle correspondant, et dans laquelle $R_2$ représente un radical alkylène en $C_2$-$C_8$.

16. Composition selon la revendication 1 dans laquelle le benzoate est un composé de formule VI.

17. Composition selon la revendication 16 dans laquelle les symboles R représentent chacun un radical tert-butyle et tous les radicaux R se trouvent en méta par rapport au radical carbonyle, et dans laquelle $R_3$ représente un radical alkylène en $C_2$-$C_8$.

18. Composition selon la revendication 1 dans laquelle le benzoate est un composé de formule VII.

19. Composition selon la revendication 18 dans laquelle les radicaux R sont tous en méta par rapport au radical carbonyle lié au noyau phényle et dans laquelle $R_8$ représente un radicale alkyle en $C_1$-$C_{24}$ .

20. Composition selon la revendication 1 qui contient de 0,2 à 4,0% en poids d'un benzoate par rapport au poids du poly-(chlorure de vinyle).

21. Composition selon la revendication 1 qui contient en outre un benzotriazole, un phénol à empêchement stérique ou des mélanges de ces composés, la quantité du benzotriazole pouvant aller jusqu'à 100% en poids par rapport à celle du benzoate et celle du phénol à empêchement stérique jusqu'à 33% en poids par rapport à celle du benzoate, la quantité totale des deux additifs supplémentaires ne dépassant pas la quantité du benzoate.

22. Composition selon la revendication 21 dans laquelle le benzoate répond à la formule II.

23. Composition selon la revendication 21 dans laquelle le benzoate est un composé de formule IV.